(19) **Europäisches Patentamt**

**European Patent Office**

**Office européen des brevets**

(11) **EP 1 354 851 A1**

(12) **EUROPEAN PATENT APPLICATION**

(43) Date of publication:
**22.10.2003 Bulletin 2003/43**

(51) Int Cl.$^7$: **C01B 3/06**, H01M 8/06

(21) Application number: **03252127.0**

(22) Date of filing: **03.04.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK RO**

(30) Priority: **16.04.2002 US 124081**

(71) Applicant: **Hewlett-Packard Company**
**Palo Alto, CA 94304 (US)**

(72) Inventors:
• **Devos, John A.**
**Corvallis, OR 97330 (US)**
• **Harding, Philips**
**Albany, OR 97321 (US)**
• **Prasad, Ravi**
**Corvallis, OR 97330 (US)**
• **Tsan, Jospeh W.**
**Corvallis, OR 97330 (US)**

(74) Representative: **Jackson, Richard Eric et al**
**Carpmaels & Ransford,**
**43 Bloomsbury Square**
**London WC1A 2RA (GB)**

(54) **Hydrogen Production system**

(57) A hydrogen production system includes a reactor having an inlet and an outlet and a catalyst disposed in the reactor. The reactor is preferably configured to receive a continuous flow of aqueous metal hydride

**EP 1 354 851 A1**

**Description**

FIELD OF THE INVENTION

This invention relates to the field of hydrogen production. More particularly, the present invention provides methods and apparatus for generating hydrogen.

BACKGROUND OF THE INVENTION

Over the past century the demand for energy has grown exponentially. With the growing demand for energy, many different energy sources have been explored and developed. One of the primary sources of energy has been and continues to be the combustion of hydrocarbons.
However, the combustion of hydrocarbons usually results in incomplete combustion and non-combustibles that contribute to smog and other pollutants in varying amounts.

As a result of the pollutants created by the combustion of hydrocarbons, the desire for cleaner energy sources has increased in more recent years. With the increased interest in cleaner energy sources, fuel cells have become more popular and more sophisticated. Research and development on fuel cells has continued to the point that many speculate that fuel cells will soon compete with the gas turbine for generating large amounts of electricity for cities, the internal combustion engine for powering automobiles, and batteries that run a variety of small and large electronics.

Fuel cells conduct an electrochemical energy conversion of hydrogen and oxygen into electricity and heat. Fuel cells are similar to batteries, but they can be "recharged" while providing power.

Fuel cells provide a DC (direct current) voltage that may be used to power motors, lights, or any number of electrical appliances. There are several different types of fuel cells, each using a different chemistry. Fuel cells are usually classified by the type of electrolyte used. The fuel cell types are generally categorized into one of five groups: proton exchange membrane (PEM) fuel cells, alkaline fuel cells (AFC), phosphoric-acid fuel cells (PAFC), solid oxide fuel cells (SOFC), and molten carbonate fuel cells (MCFC).

**PEM Fuel Cells**

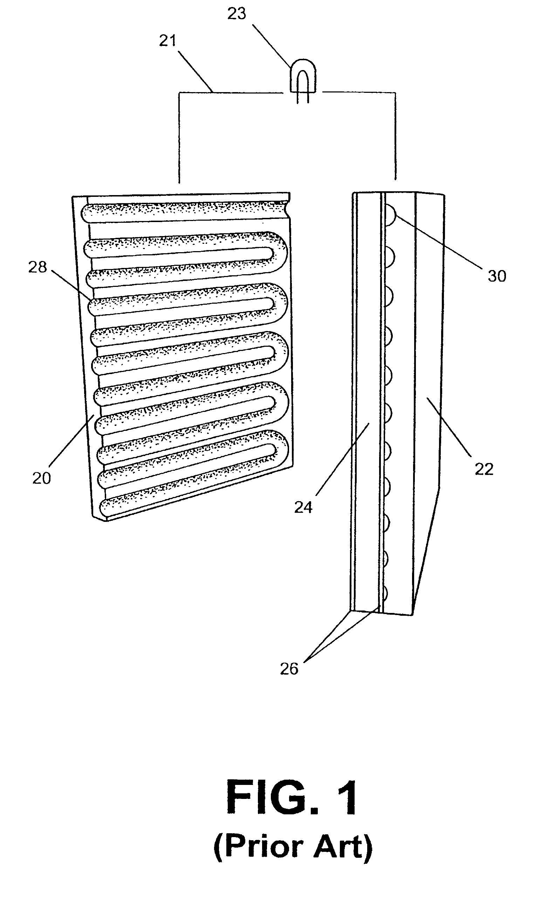

The PEM fuel cells are currently believed to be the most promising fuel cell technology, and use one of the simplest reactions of any fuel cell. Referring to FIG. 1, a PEM fuel cell will typically include four basic elements: an anode (20), a cathode (22), an electrolyte (PEM) (24), and a catalyst (26) arranged on each side of the electrolyte (24).

Anode (20) is the negative post of the fuel cell and conducts electrons that are freed from hydrogen molecules such that the electrons can be used in an external circuit (21). Anode (20) includes channels (28) etched therein to disperse the hydrogen gas as evenly as possible over the surface of catalyst (26).

Cathode (22) is the positive post of the fuel cell, and has channels (30) etched therein to evenly distribute oxygen (usually air) to the surface of catalyst (26). Cathode (22) also conducts the electrons back from the external circuit (21) to the catalyst (26), where they can recombine with the hydrogen ions and oxygen to form water. Water is the only by-product of the PEM fuel cell.

The electrolyte (24) is the proton exchange membrane (PEM) (24). The PEM (24) is a specially treated porous material that conducts only positively charged ions. PEM (24) prevents the passage of electrons.

Catalyst (26) is typically a platinum powder thinly coated onto carbon paper or cloth. Catalyst (26) is usually rough and porous so as to maximize the surface area of the platinum that can be exposed to the hydrogen or oxygen. Catalyst (26) facilitates the reaction of oxygen and hydrogen.

In a working fuel cell, PEM (24) is sandwiched between anode (20) and cathode (22).

The operation of the fuel cell can be described generally as follows. Pressurized hydrogen gas ($H_2$) enters the fuel cell on the anode (20) side. When an $H_2$ molecule comes into contact with the platinum on catalyst (26), it splits into two $H^+$ ions and two electrons ($e^-$). The electrons are conducted through the anode (20), where they make their way through external circuit (21) that may be providing power to do useful work (such as turning a motor or lighting a bulb (23)) and return to the cathode side (22) of the fuel cell.

Meanwhile, on the cathode (22) side of the fuel cell, oxygen gas ($O_2$) is being forced through the catalyst (26). In some PEM fuel cell systems the $O_2$ source may be air. As $O_2$ is forced through catalyst (26), it forms two oxygen atoms, each having a strong negative charge. This negative charge attracts the two $H^+$ ions through PEM (24), where they combine with an oxygen atom and two of the electrons from the external circuit to form a water molecule ($H_2O$).

The PEM fuel cell reaction just described produces only about 0.7 volts, therefore, to raise the voltage to a more useful level, many separate fuel cells are often combined to form a fuel cell stack.

PEM fuel cells typically operate at fairly low temperatures (about 80° C/176° F), which allows them to warm up quickly and to be housed in inexpensive containment structures because they do not need any special materials capable of withstanding the high temperatures normally associated with electricity production.

**Alkali Fuel Cells**

In contrast to PEM fuel cells, Alkali fuel cells operate on compressed hydrogen and oxygen and generally use a solution of potassium hydroxide in water as their electrolyte. Operating temperatures inside alkali cells are typically around 150 to 200° C (about 300 to 400° F).

In Alkali fuel cells, hydroxyl ions (OH-) migrate from the cathode to the anode. At the anode, hydrogen gas reacts with the OH- ions to produce water and release electrons. Electrons generated at the anode supply electrical power to an external circuit and then return to the cathode. At the cathode, the electrons react with oxygen and water to produce more hydroxyl ions that diffuse into the electrolyte.

Alkali fuel cells operate at efficiencies up to 70 percent and, like other fuel cells, create little pollution. Because they produce potable water in addition to electricity, they have been used in spacecraft, for example. A major drawback, however, is that alkali cells need very pure hydrogen or an undesirable chemical reaction forms a solid carbonate that interferes with chemical reactions inside the cell.

Because most methods of generating hydrogen from other fuels produce some carbon dioxide, this need for pure hydrogen has slowed work on alkali fuel cells in recent years. Another drawback is the need for large amounts of a costly platinum catalyst to increase the rate of reaction.

### Molten Carbonate Fuel Cells

In a molten carbonate fuel cell (MCFC), carbonate salts are the electrolyte. Heated to 650° C (about 1,200° F), the salts melt and conduct carbonate ions ($CO_3$) from the cathode to the anode. At the anode, hydrogen reacts with the ions to produce water, carbon dioxide, and electrons. The electrons travel through an external circuit providing electrical power along the way before returning to the cathode. At the cathode, oxygen from air and carbon dioxide recycled from the anode react with the electrons to form $CO_3$ ions that replenish the electrolyte and transfer current through the fuel cell.

High-temperature MCFCs can extract hydrogen from a variety of fuels using either an internal or external reformer. MCFCs often use catalysts made of nickel. MCFCs exhibit up to 60 percent efficiency, and this can rise to 80 percent if the waste heat is utilized for cogeneration. Currently, demonstration units have produced up to 2 megawatts (MW), but designs exist for units of 50 to 100 MW capacity.

Two major difficulties with molten carbonate technology put it at a disadvantage compared to solid oxide cells (discussed below). One is the complexity of working with a liquid electrolyte rather than a solid. The other stems from the chemical reaction inside a molten carbonate cell. Carbonate ions from the electrolyte are used up in the reactions at the anode, making it necessary to compensate by injecting carbon dioxide at the cathode.

### Phosphoric Acid Fuel Cells

Phosphoric acid fuel cells (PAFC) operate at temperatures of around 150 to 200° C (about 300 to 400° F). As the name suggests, PAFCs use phosphoric acid as the electrolyte. Positively charged hydrogen ions migrate through the electrolyte from the anode to the cathode. Electrons generated at the anode travel through an external circuit providing electric power along the way before returning to the cathode. There the electrons, hydrogen ions and oxygen form water, which is expelled from the cell. A platinum catalyst at the electrodes facilitates the reactions.

A serious problem with the PAFC is that the presence of acid requires that components in the cell resist corrosion.

### Solid Oxide Fuel Cells

A solid oxide fuel cell (SOFC) uses a hard ceramic electrolyte instead of a liquid and operates at temperatures up to 1,000 degrees C (about 1,800 degrees F). A mixture of zirconium oxide and calcium oxide form a crystal lattice, though other oxide combinations have also been used as electrolytes. The solid electrolyte is coated on both sides with specialized porous electrode materials.

At the high operating temperature, oxygen ions (with a negative charge) migrate through the crystal lattice. When a fuel gas containing hydrogen is passed over the anode, a flow of negatively charged oxygen ions moves across the electrolyte to oxidize the fuel. The oxygen is supplied, usually from air, at the cathode. Electrons generated at the anode travel through an external load to the cathode, completing the circuit and supplying electric power along the way. Generating efficiencies can of SOFC's range up to about 60 percent.

In one configuration, the SOFC consists of an array of tubes.

Another variation includes a more conventional stack of disks.

### Hydrogen Generation for Fuel Cells

As discussed above, each of the fuel cells described uses oxygen and hydrogen to produce electricity. The oxygen required for a fuel cell is usually supplied by the air. In fact, for the PEM fuel cell, ordinary air is pumped into the cathode. However, hydrogen is not as readily available as oxygen.

Hydrogen is difficult to generate, store and distribute. One common method for producing hydrogen for fuel cells is the use of a reformer. A reformer turns hydrocarbons or alcohol fuels into hydrogen, which is then fed to the fuel cell. Unfortunately, reformers are problematic. If the hydrocarbon fuel is gasoline or other common hydrocarbon, $SO_x$, $NO_x$ and other undesirable products are created. Sulfur, in particular, must be removed or it can damage the electrode catalyst. Reformers usually operate at high temperatures as well, which consumes much of the energy of the feedstock material.

Hydrogen may also be created by low temperature chemical reactions utilizing a fuel source in the presence of a catalyst. However, many problems are associated with low temperature chemical reactions for producing hydrogen. One of the primary problems is the separation of the hydrogen from the other products of the chemical reaction. As hydrogen is generated from a fuel source such as an alkali metal hydride or a borohydride, the reactions generate foam or froth. Typically, the hydrogen produced in the reaction chamber is separated by a unit discrete from the reactor. The separation scheme is usually a gravity-aided disengagement chamber to break the foam generated in the reactor. A discrete separator adds to the process time and equipment cost associated with hydrogen production for fuel cells.

In addition, conventional technologies for producing hydrogen, including those using sodium borohydride ($NaBH_4$) as the fuel source focus on batched processes, in which only a discrete amount of hydrogen can be produced at a time. Further, in batched processes, any precipitates resulting from the hydrogen-producing reaction collect in the reaction chamber itself.

Low temperature chemical reactions such as the production of hydrogen from sodium borohydride usually require a catalyst to produce hydrogen at an acceptable rate. Catalysts are usually most cost effective when they expose a maximum amount of surface area to the fuel source. However, the catalyst often bunches together, exposing less than a maximum surface area to the fuel source.

Further, the frothing of the reaction as hydrogen bubbles are formed increases the backpressure of the fuel source. If it is desirable to continuously produce the hydrogen, the pressure of the fuel source must be constantly increased to overcome the backpressure caused by the frothing hydrogen bubbles.

Some have added the catalyst in a controlled fashion to slow the speed of the reaction, to minimize frothing and to reduce or eliminate the need for a hydrogen separator, but slowing the reaction decreases the amount of hydrogen available to the fuel cell.

## SUMMARY OF THE INVENTION

The present invention provides, among other things, a hydrogen production system including a reactor having an inlet and an outlet, and a catalyst disposed in the reactor, where the reactor is configured to process a continuous flow of aqueous metal hydride.

## BRIEF DESCRIPTION OF THE DRAWINGS

The foregoing and other features and aspects of the invention will become further apparent upon reading the following detailed description and upon reference to the drawings in which:

FIG. 1 is an unassembled perspective view of a fuel cell apparatus.

FIG. 2 is a cut-away view of a reactor according to one embodiment of the present invention.

FIG. 3 a cut-away view of a reactor according to one embodiment of the present invention.

FIG. 4 is a cut-away view of a reactor according to one embodiment of the present invention.

FIG. 5 is a cut-way view of a reactor according to one embodiment of the present invention.

Throughout the drawings, identical reference numbers designate similar, but not necessarily identical, elements.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

## DETAILED DESCRIPTION OF THE EMBODIMENTS

Illustrative embodiments of the invention are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, that will vary from one implementation to another. Moreover, it will be appreciated that such a development effort might be complex and time-consuming, but would nevertheless be a routine undertaking for those of ordinary skill in the art having the benefit of this disclosure.

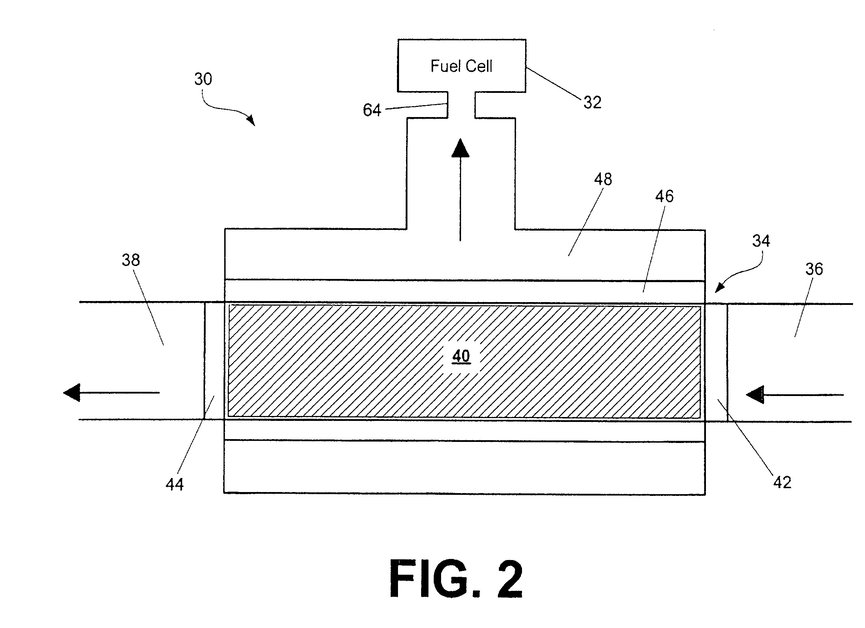

Turning now to the drawings, and in particular to FIG. 2, a hydrogen production system (30) according to one embodiment of the present invention is shown. Hydrogen production system (30) may provide hydrogen to fuel cell (32) or other apparatus requiring hydrogen. For example, hydrogen production system (30) may provide hydrogen to a PEM fuel cell similar to the one shown in FIG. 1. It will be understood by one of skill in the art having the benefit of this disclosure that hydrogen production system (30) may be used for other fuel cells as well.

According to the embodiment of FIG. 2, hydrogen production system (30) may include a reactor such as reaction chamber (34). Reaction chamber (34) preferably includes a generally cylindrical shape as shown in the figure, but this is not necessarily so. Any convenient shape for reaction chamber (34) may be used. Reaction chamber (34) may be made of metal, plastic, ceramic, composite or other materials.

Reaction chamber (34) may include a catalyst disposed therein, for example the porous catalyst bed (40) shown in FIG. 2. Catalyst bed (40) may facilitate the production of hydrogen gas by increasing the rate of reaction of a fuel source. The catalyst may include a ruthenium catalyst, a platinum catalyst, a nickel catalyst, or other catalyst. Ruthenium, platinum, nickel, and other catalysts are readily available to those of skill in the art having the benefit of this disclosure.

Catalyst bed (40) may facilitate the production of hydrogen gas in the presence of a metal hydride such as a borohydride. For example, an aqueous sodium borohydride solution in the presence of catalyst bed (40) results in the release of hydrogen gas according to the following chemical equation:

$$NaBH_4 + 2H_2O \rightarrow 4H_2 + NaBO_2 \qquad (1)$$

Reaction chamber (34) has an inlet (36) for receiving a hydrogen fuel source such as sodium borohydride and an outlet (38) for discharging waste products and reactants in a continuous manner. Reaction chamber (34) may thus advantageously facilitate continuous production of hydrogen gas as opposed to a batched process. "Continuous," as used in this disclosure, means that a flow of reactants and products may enter and exit reaction chamber (34) while the reaction is taking place. That does not mean that the production of hydrogen must continue indefinitely. For example, the need to clean the reactor or exchange the catalyst, a lack of hydrogen fuel for input to the reactor or no present need for hydrogen gas may be reasons to temporarily suspend production of hydrogen gas. However, absent any of these or similar circumstances, the reactants and resulting products, including hydrogen gas, may flow through and from the reaction chamber (34) for an indefinite period of time. "Continuous" may also encompass the recycling of products and reactants back through reaction chamber (34) to facilitate more complete utilization of the fuel source.

Located at the inlet (36) and outlet (38) of reaction chamber (34) may be hydrophilic screens (42) and (44). Hydrophilic screens (42) and (44) readily allow the passage of liquid solutions therethrough. However, such screens (42) and (44) selectively prohibit the passage of hydrogen gas via capillary resistance. Hydrophilic screens (42) and (44) may each include a stainless steel filter screen. The effective pore sizes of hydrophilic screens (42) and (44) are selected to balance pressure drop and bubble pressure to ensure liquid/gas separation. It is within the purvey of the skilled artisan having the benefit of this disclosure to select an appropriate hydrophilic screen pore size according to the specific needs of the application. For example a stainless steel filter screen may be sized according to the following equation:

$$D_{eff} = 4\sigma * \cos \theta / \Delta P, \qquad (2)$$

where $D_{eff}$ is the hydrophilic screen's effective pore size diameter,
$\sigma$ is the surface tension expressed in energy per unit area,
0 is the wetting contact angle,
and $\Delta P$ is the not to exceed design pressure differential across the hydrophilic screen for the reactor, below which hydrogen gas will not pass through the hydrophilic screen.

In one embodiment according to the present invention, use of equation (2) above may yield an effective pore size of approximately 6 □m for some applications, but this dimension is not so limited. With proper effective pore sizing, all or substantially all of the produced hydrogen gas can be prevented from passing through the hydrophilic screens.

In some embodiments, only one of hydrophilic screens (42) and (44) may be used at either inlet (36) or outlet (38).

Reaction chamber (34) may include also include a hydrophobic membrane (46) surrounding catalyst bed (40) or lining an internal or external surface of the reaction chamber. In the embodiment shown, hydrophobic membrane (46) does not cover inlet (36) or outlet (38) so as to allow the passage of liquids through the reaction chamber. Hydrophobic membrane (46) selectively allows hydrogen gas to pass therethrough, however, liquids tend not to pass through the hydrophobic membrane. Therefore, the combination of hydrophobic membrane (46) and hydrophilic membranes (42) and (44) advantageously provide separation paths for the resultant liquid/gas mixture produced from the sodium borohydride solution. Thus, reaction chamber (34) also includes an integrated separator.

Hydrophobic membrane (46) may include Goretex®, Celgard®, or other material. Advantageously, the use of Goretex®, Celgard®, or other readily available material may be used as a liquid/gas separator in reaction chamber (34) itself because of the relatively low temperatures associated with the production of hydrogen gas from metal hydrides such as borohydrides, alkali hydrides, and the like. According to the present embodiment using sodium borohydride as the fuel source, the temperature of reactor (34) may not exceed the material compatibility of any component of the reactor, such as the boiling point of the fuel, the glass transition temperature of hydrophobic membrane (46), or other temperature parameter. In some embodiments the temperature of the reactor does not exceed about 100° C (212° F).

Hydrogen production system (30) may also include a gas collection chamber (48), which may be adjacent to or surrounding reaction chamber (34). Hydrogen gas produced in reaction chamber (34) may pass through hydrophobic membrane (46) and enter gas collection chamber (48). Gas collection chamber (48) may provide a path (64) for the produced hydrogen to communicate with a fuel cell (32). Fuel cell (32) may then operate according to the descriptions provided above.

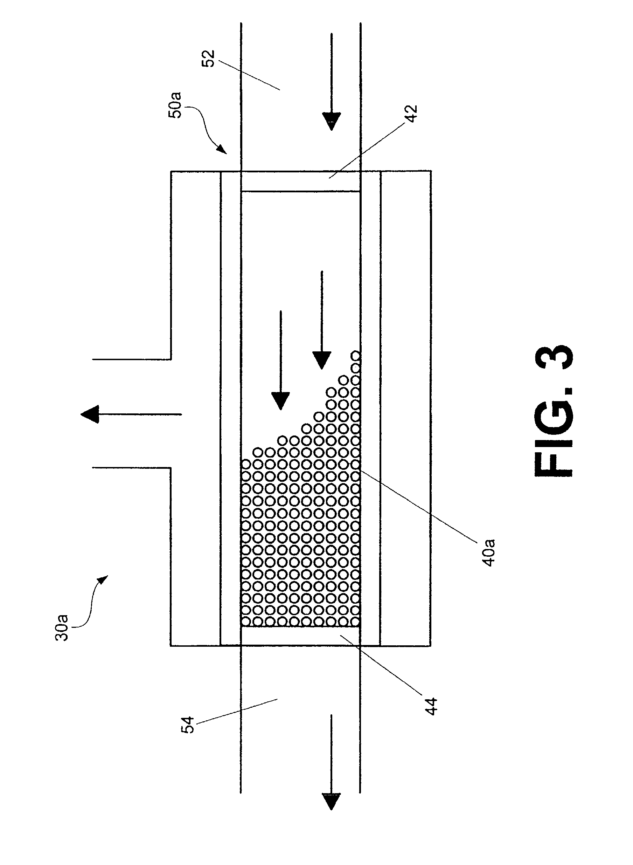

Turning next to FIG. 3, another embodiment of a hydrogen generation system (30a) is disclosed. According to the embodiment of FIG. 3, a fuel source, for example sodium borohydride, may enter reaction chamber (50a) through inlet (52). The flow of the fuel source and resulting products is indicated by the arrows shown. As the sodium borohydride enters reaction chamber (50a), it tends to engage catalyst bed (40a) and force the catalyst bed to "bunch up" toward outlet (54) in the direction of the fluid flow. The flow causes unconstrained catalyst beads or pellets to move in an uncontrolled manner. The redistribution of catalyst bed (40a) to the configuration shown in FIG. 3 may slow the rate of reaction and/or hinder the production of hydrogen gas. The redistribution of catalyst bed (40a) may also result in precipitate accumulation with its associated problems in reaction chamber (50a).

Catalysts such as catalyst bed (40a) (which may include ruthenium) are often very expensive and are most effective when a maximum surface area is exposed to the reactants. Therefore, the "bunching up" of catalyst bed (40a) undermines the effectiveness of the catalyst.

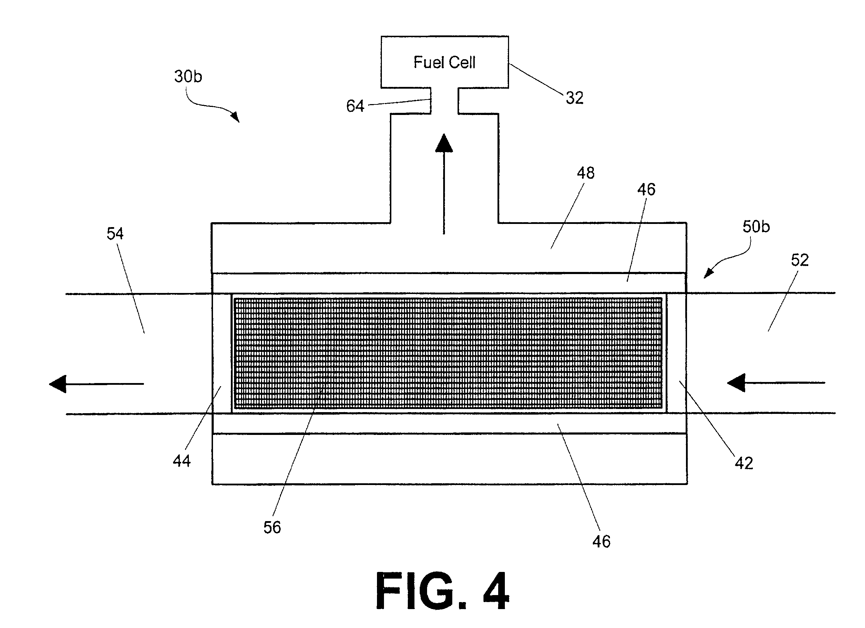

Turning next to FIG. 4, one example of a hydrogen generation system (30b) including a catalyst distribution structure (56) is shown. According to the embodiment of FIG. 4, a catalyst-plated, high surface area screen (56) is rolled and inserted into reaction chamber (50b). Catalyst-plated, high surface area screen (56) advantageously provides a structure that is not easily rearranged by the flow of reactants and products through the reaction chamber (50b). Therefore, the catalyst material continues to have a very high surface area exposed to the flow of reactants to maximize the reaction rate and thus the production of hydrogen from, for example, sodium borohydride.

The catalyst distribution structure may also include multiple catalyst-plated, high surface area mesh strips. The strips (appearing like screen (56) which is shown only in a one-dimensional view) may be placed in reaction chamber (50b) in a manner similar to high surface area screen (56).

Alternatively, the catalyst distribution structure may include catalyst-coated high surface area fibrous material.

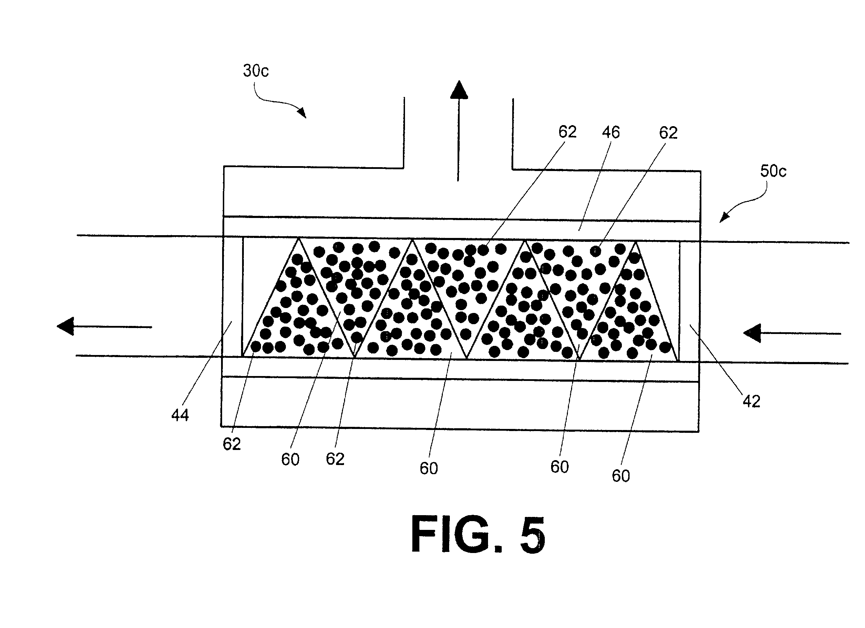

Turning next to FIG. 5, another embodiment of a hydrogen generation system (30c) with a catalyst distribution structure is shown. According to the embodiment of FIG. 5, the catalyst distribution structure includes multiple cells or chambers (60), each housing a portion of catalyst beads (62). The multiple cells (60) may include screen material or other material with some structural integrity that prevents the migration of catalyst beads (62) while allowing the passage of liquids thereby.

Operation of a hydrogen reactor according to one or more of the embodiments explained above may be described as follows. For purposes of operational discussion, reference is made below to FIG. 4. However, it will be understood that the other embodiments shown are also germane to the operation of the hydrogen reactor.

Referring now to FIG. 4, a reaction chamber (50b) for generating hydrogen may be located in proximity to a fuel cell (32). An aqueous solution of sodium borohydride or other solution is provided to flow continuously through reaction chamber (50b) as a hydrogen fuel source. The aqueous solution of sodium borohydride flows into reaction chamber (50b) through inlet (52). The aqueous solution may pass a hydrophilic screen (42) disposed in inlet (52). Hydrophilic screen (42) readily allows the passage of liquid solutions such as sodium borohydride.

After passing through inlet (52), the aqueous solution tends to flow along a path through the reaction chamber defined by hydrophobic membrane (46). Hydrophobic membrane (46) is resistant to the passage of liquids, but permeable to gases.

Once inside reaction chamber (50b), the solution of sodium borohydride produces hydrogen gas at an accelerated rate in the presence of a catalyst. The catalyst may be, for example, a ruthenium catalyst plated on high surface area screen (56). As the reaction progresses, hydrogen gas is released from the aqueous solution. The hydrogen may migrate through the gas permeable hydrophobic membrane (46) and into gas collection chamber (48) which, in the embodiment shown in FIG. 4, surrounds hydrophobic membrane (46).

Hydrogen gas produced in the reaction chamber (50b) may tend to flow with the stream of aqueous sodium borohydride toward the outlet (54) of reaction chamber (50b). However, hydrophilic membrane (44) prevents the passage of hydrogen gas therethrough. Second hydrophilic membrane (42) also prevents the passage of hydrogen gas, leaving hydrophobic membrane (46) as the path of least resistance for the hydrogen gas. Thus the hydrogen gas is separated from the liquids and other products within reaction chamber (50b).

As produced hydrogen gas passes through hydrophobic membrane (46) it collects in gas collection chamber (48). Gas collection chamber (48) may include a passageway (64) leading to fuel cell (32). Gas collection chamber (48) may release the collected hydrogen at a regular rate to the fuel cell (32), which may then operate according to any known mechanism to produce a supply of electricity.

The flow of sodium borohydride through reaction chamber (50b) may be recycled if desired to extract a maximum amount of hydrogen from the solution, or a fresh source of sodium borohydride or other material may be continuously supplied to the reaction chamber.

The preceding description has been presented only to illustrate and describe the invention. It is not intended to be exhaustive or to limit the invention to any precise form disclosed. Many modifications and variations are possible in light of the above teaching.

The embodiments shown were chosen and described in order to best explain the principles of the invention and its practical application. The preceding description is intended to enable others skilled in the art to best utilize the invention in various embodiments and with various modifications as are suited to the particular use contemplated, It is intended that the scope of the invention be defined by the following claims.

**Claims**

1. A hydrogen production system (30) comprising:

   a reactor (34) having an inlet (36) and an outlet (38); and
   a catalyst (40) disposed in the reactor (34);

   wherein said reactor (34) is configured to process a continuous flow of aqueous metal hydride.

2. The system of claim 1, wherein said reactor further comprises a hydrophobic membrane (46) lining an interior surface of said reactor (34), wherein the hydrophobic membrane (34) is permeable to hydrogen gas produced in said reactor.

3. The system of claims 1 to 2, further comprising a first hydrophilic membrane (44) at said outlet (38) of said reactor (34), wherein said hydrophilic membrane (44) substantially prevents the passage of hydrogen gas.

4. The system of claim 3, further comprising a second hydrophilic membrane (42) at said inlet (36) of said reactor, wherein said second hydrophilic membrane (42) substantially prevents the passage of hydrogen gas.

5. The system of claims 1 to 4, further comprising a hydrogen gas collection chamber (48) disposed about said reactor for receiving hydrogen gas passing through said hydrophobic membrane (46).

6. The system of claims 1 to 5, wherein said hydrogen gas collection chamber (48) provides hydrogen to a fuel cell.

7. The system of claims 1 to 6, wherein said catalyst (40) is disposed in a distribution structure (56) for maintaining spacing of catalyst particles.

8. A fuel cell apparatus comprising:

   an anode (20);
   a cathode (22);
   an electrolyte (24) disposed between said anode (20) and cathode (22); and
   a hydrogen reactor (34) providing hydrogen to said anode, said reactor (34) configured to receive a continuous flow of an aqueous metal hydride.

9. The apparatus of claim 8, further comprising a hydrophobic liner (46) disposed inside the hydrogen reactor (34) and a hydrophilic membrane (44) disposed at an outlet (38) of said hydrogen reactor for separating produced hydrogen gas from aqueous metal hydride in the presence of a catalyst (40).

10. A method of producing hydrogen gas comprising continuously flowing aqueous metal hydride through a reactor (34) in the presence of a catalyst.

# FIG. 1
## (Prior Art)

# FIG. 2

EP 1 354 851 A1

EP 1 354 851 A1

30a

54

50a

52

44

42

40a

# FIG. 3

EP 1 354 851 A1

30b

Fuel Cell

64

32

48

46

50b

52

54

44

56

46

42

**FIG. 4**

FIG. 5

**European Patent Office**

## PARTIAL EUROPEAN SEARCH REPORT

which under Rule 45 of the European Patent Convention shall be considered, for the purposes of subsequent proceedings, as the European search report

Application Number

EP 03 25 2127

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 97 17125 A (BUXBAUM ROBERT E) 15 May 1997 (1997-05-15) * page 10, line 21 - line 23 * * page 17, line 1 - line 5 * --- | 2 | C01B3/06 H01M8/06 |
| X | US 2001/022960 A1 (FUKUMOTO KAZUHIRO ET AL) 20 September 2001 (2001-09-20) | 8,10 | |
| Y | * paragraph [0073] - paragraph [0074] * --- | 2,3 | |
| Y | WO 01 074710 A (MANHATTAN SCIENTIFICS , INC.) 11 October 2001 (2001-10-11) * page 19, line 20 - page 20, line 8 * --- | 2,3 | |
| A | WO 01 51410 A (AMENDOLA STEVEN C ;MILLENNIUM CELL LLC (US); BINDER MICHAEL (US);) 19 July 2001 (2001-07-19) * page 11, line 8 - line 14 * * page 13, line 8 - line 10 * * page 22, line 10 - line 14 * ----- | 2 | |

TECHNICAL FIELDS SEARCHED (Int.Cl.7)

C01B
H01M

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| BERLIN | 27 August 2003 | Clement, J-P |

EPO FORM 1503 03.82 (P04C07)

**European Patent Office**

**INCOMPLETE SEARCH
SHEET C**

Application Number

EP 03 25 2127

Claim(s) searched completely:
    2-10

Claim(s) searched incompletely:
    1

Reason for the limitation of the search:

Present claim 1 relates to an apparatus defined by reference to a desirable characteristic or property, namely the reactor 34 is configured to process a continuous flow of aqueous flow of aqueous metal hydride. The claim covers all apparatus having this characteristic or property, whereas the application provides support within the meaning of Article 84 EPC and/or disclosure within the meaning of Article 83 EPC for only a very limited number of such apparatus. In the present case, the claims so lack support, and the application so lacks disclosure, that a meaningful search over the whole of the claimed scope is impossible. Independent of the above reasoning, the claims also lack clarity (Article 84 EPC). An attempt is made to define the apparatus by reference to a result to be achieved. Again, this lack of clarity in the present case is such as to render a meaningful search over the whole of the claimed scope impossible. Consequently, the search has been carried out for those parts of the claims which appear to be clear, supported and disclosed, namely those parts relating to the apparatus according to the embodiment of FIG. 2

**EP 1 354 851 A1**

## ANNEX TO THE EUROPEAN SEARCH REPORT
## ON EUROPEAN PATENT APPLICATION NO.

EP 03 25 2127

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2003

| Patent document cited in search report | | Publication date | Patent family member(s) | | Publication date |
|---|---|---|---|---|---|
| WO 9717125 | A | 15-05-1997 | WO<br>US<br>US | 9717125 A1<br>6183543 B1<br>2001000380 A1 | 15-05-1997<br>06-02-2001<br>26-04-2001 |
| US 2001022960 | A1 | 20-09-2001 | JP<br>JP | 2001199701 A<br>2001342001 A | 24-07-2001<br>11-12-2001 |
| WO 01074710 | A | 11-10-2001 | AU<br>WO<br>US | 5005501 A<br>0174710 A1<br>2001045364 A1 | 15-10-2001<br>11-10-2001<br>29-11-2001 |
| WO 0151410 | A | 19-07-2001 | US<br>AU<br>WO<br>US | 6534033 B1<br>2763201 A<br>0151410 A1<br>2002083643 A1 | 18-03-2003<br>24-07-2001<br>19-07-2001<br>04-07-2002 |

EPO FORM P0459

For more details about this annex : see Official Journal of the European Patent Office, No. 12/82

15